# EUROPEAN PATENT APPLICATION

(11) **EP 3 792 310 A1**
(43) Date of publication of application: **17.03.2021**
(21) Application number: 19799264.7
(22) Date of filing: 07.05.2019
(51) Int. Cl.: C08L 23/08, C08K 5/14, H01M 8/0284, H01M 8/10

(54) **RUBBER COMPOSITION**

(30) Priority: 09.05.2018 JP 2018090817
(71) Applicant: NOK Corporation, Minato-ku Tokyo 105-8585 (JP)
(72) Inventor: SUZUKI Akihiro, Fujisawa-shi, Kanagawa 251-0042 (JP); KAWASAKI Kuniyoshi, Fujisawa-shi, Kanagawa 251-0042 (JP)
(74) Representative: Beckmann, Claus
(86) International application number: PCT/JP2019/018262
(87) International publication number: WO 2019/216311

(57) **Abstract**

A rubber composition comprising 2.5 to 7.5 parts by weight of an ethylene/α-olefin copolymer having a melting point of 100°C or higher and a glass transition temperature Tg of -55°C or lower, based on 100 parts by weight of ethylene/butene/diene copolymer rubber. The rubber composition can improve processability, such as roll processability and bite of the compound into the screw and maintain excellent compression set characteristics under the operating environment of fuel cells, while maintaining the characteristics of ethylene/butene/diene copolymer rubber, such as compression set characteristics (95°C, 500 hours) and low temperature elastic recovery test (evaluated by the TRIO value and TR70 value).

## Description

### TECHNICAL FIELD

The present invention relates to a rubber composition. More particularly, the present invention relates to a rubber composition that can be effectively used, for example, as a crosslinking molding material for sealing materials for solid polymer fuel cell separators.

### BACKGROUND ART

Fuel cells rarely need to use fossil fuels, for which attention must be paid to resource depletion, generate almost no noise during power generation, and have a higher energy recovery rate than other energy generation mechanisms. Due to such excellent characteristics, their practical use has started for households, automobiles, etc.

In particular, solid polymer fuel cells operate at a lower temperature than other types of fuel cells; thus, there is no concern of corrosion regarding the components constituting the cells and they have the characteristic of being able to discharge a relatively large current despite their low temperature operation. They are attracting attention as alternative power sources for on-vehicle internal combustion engines, as well as for household cogeneration.

Of the components constituting solid polymer fuel cells, separators generally have a plurality of parallel grooves formed on both sides or one side of flat plates, transmit the electricity generated in the gas diffusion electrode inside the fuel cell to the outside, and discharge the water generated in the grooves in the process of power generation, thereby playing a role of ensuring the grooves as passages for the reaction gas flowing into the fuel cell.

Such fuel cell separators are required to be further downsized. Further, since a large number of separators are stacked for use, there is a demand for sealing materials for separators excellent in durability and usable for a long period of time.

Moreover, electrolyte membranes of solid polymer fuel cells are polymer membranes, such as perfluorosulfonic acid membranes. When the sealing material is disposed near the electrolyte membrane and crosslinked, it is necessary to take care so as not to deteriorate the electrolyte membrane due to heating during crosslinking. Therefore, it is desirable that the sealing material for fuel cell is one that can be crosslinked at a lower temperature for a shorter period of time.

As such a separator material, for example, rubber using ethylene/propylene/diene copolymer rubber (EPDM) has been proposed (Patent Documents 1 and 2).

On the other hand, one of the challenges of vehicles equipped with fuel cells is that in any case, such as when starting them at a low temperature, during traveling, and when leaving them below freezing after traveling, it is necessary to design and control them so as not cause a state of immobility due to freezing of FC stacks and system parts. Cold resistance is required also for sealing materials. However, EPDM does not have sufficient cold resistance.

In contrast, there has been proposed a fuel cell sealing member having further improved cold resistance by using ethylene/butene/diene copolymer rubber (Patent Document 3).

Patent Document 3 discloses a sealing member comprising a crosslinked product of a rubber composition containing (A) solid rubber comprising ethylene/butene/diene rubber, (B) a poly-α-olefin compound having a kinetic viscosity of 8 mm²/sec or less at 100°C, and an organic peroxide crosslinking agent.

In the Examples of Patent Document 3, low viscosity PAO-1 ∼ 3 having a kinematic viscosity of 2 to 8 mm²/sec at 100°C are used as the component (B). Their melting points (pour points) are -73 to -56°C, and they are all liquids at room temperature and used as plasticizers for improving low temperature properties. When low viscosity PAO-4 having a kinematic viscosity of 65 mm²/sec at 100°C (pour point -51°C) is used, the low temperature compression set is evaluated as ×.

Here, by copolymerizing butene as the α-olefin of the ethylene/α-olefin/diene copolymer rubber, low temperature properties are exhibited because the flexibility is superior to EPDM; however, it is likely to be sticky, and creep (cold flow) at room temperature is observed. Such copolymer rubber has a low green strength, which may cause a problem of, for example, compound interruption when the rubber compound formed into a belt shape is supplied to the screw during injection molding or extrusion molding of the rubber.

### PRIOR ART DOCUMENTS

### PATENT DOCUMENTS

Patent Document 1 : JP-A-2009-094056
Patent Document 2 : JP-A-2011-249283
Patent Document 3 : JP-A-2017-183162

### OUTLINE OF THE INVENTION

### PROBLEM TO BE SOLVED BY THE INVENTION

An object of the present invention is to provide a rubber composition having excellent processability while maintaining the characteristics of ethylene/butene/diene copolymer rubber.

### MEANS FOR SOLVING THE PROBLEM

The above object of the present invention can be achieved by a rubber composition comprising 2.5 to 7.5 parts by weight of an ethylene/α-olefin copolymer having a melting point of 100°C or higher and a glass transition temperature Tg of - 55°C or lower, based on 100 parts by weight of ethylene/butene/diene copolymer rubber.

### EFFECT OF THE INVENTION

The rubber composition according to the present invention can improve processability, such as roll processability and bite of the compound into the screw, and maintain excellent compression set characteristic under the operating environment of fuel cells, while maintaining the characteristics of ethylene/butene/diene copolymer rubber, such as compression set characteristic (95°C, 500 hours) and low temperature elastic recovery test (evaluated by the TRIO value and TR70 value).

This rubber composition is used, for example, as a crosslinking molding material for sealing materials for solid polymer fuel cell separators. For example, a crosslinked molded product obtained by crosslinking molding with an organic peroxide is effectively used as a sealing member for solid polymer fuel cells in a state in which a fuel cell constituent member and a sealing member are bonded via an adhesive, or in a state in which sealing members are bonded together via an adhesive.

### EMBODIMENTS FOR CARRYING OUT THE INVENTION

As the ethylene/butene/diene copolymer rubber, the content of the ethylene component is preferably about 60 to 80 wt.%, more preferably about 65 to 70 wt.%. Within such a range, the glass transition temperature Tg of the copolymer rubber exhibits a minimum value, and the cold resistance is improved. Further, the diene content is about 1 to 20 wt.%, preferably about 3 to 15 wt.%, in terms of low temperature fatigue resistance. In practice, commercially available products, such as EBT produced by Mitsui Chemicals, Inc., are used as they are.

Usable examples of the ethylene/α-olefin copolymer blended into the ethylene/butene/diene copolymer rubber include those whose α-olefin has 3 to 20 carbon atoms, preferably 4 to 8 carbon atoms, such as butene-1, pentene-1, hexene-1, 4-methylpentene-1, heptene-1, and octene-1, and those having a melting point (according to JIS K7121 corresponding to ISO 3146) of 100°C or higher and a glass transition temperature Tg (according to JIS K7121 corresponding to ISO 3146) of - 55°C or lower. In practice, commercially available products, such as Engage XLT8677 produced by Dow Chemical Co, Ltd., are used as they are.

If a copolymer having a melting point of lower than about 100°C, which is the upper limit for the operating environment of fuel cells, is used, the state of melting and solidification may change during use under compression conditions, and the compression set value may be greatly deteriorated. Further, if a copolymer having a Tg of higher than -55°C is used, not only the compression set value, but also the TR70 value in the low temperature elastic recovery test, are deteriorated, and it becomes inferior in low temperature resistance.

The blending ratio of the ethylene/α-olefin copolymer is about 2.5 to 7.5 parts by weight, preferably about 3 to 7 parts by weight, based on 100 parts by weight of the ethylene/butene/diene copolymer rubber. If the copolymer is used at a ratio less than this range, resilience cannot be imparted to the blend. In contrast, if the copolymer is used at a ratio higher than this range, the copolymer is crystallized during roll kneading after kneading with a kneader; thus, the roll winding properties of the rubber compound are significantly deteriorated, thereby making processing difficult.

Further, in order to improve the processability and increase the green strength, the blend thereof is not made physically dispersed but needed to be melt-kneaded using a kneader or the like. The melting temperature is generally about 120 to 150°C.

As the crosslinking agent for the blended rubber, an organic peroxide is mainly preferable. Examples of the organic peroxide include tert-butyl peroxide, dicumyl peroxide, 2,5-dimethyl-2,5-di-tert-butylperoxyhexane, 2,5-dimethyl-2,5-di-tert-butylperoxyhexyne-3, tert-butyl cumyl peroxide, 1,3-di-tert-butylperoxyisopropylbenzene, 2,5-dimethyl-2,5-dibenzoylperoxyhexane, peroxyketal, peroxyester, and the like.

Examples of the peroxyketal include n-butyl-4,4-di(tert-butylperoxy)valerate, 2,2-di(tert-butylperoxy)butane, 2,2-di[4,4-di(tert-butylperoxy)cyclohexyl]propane, 1,1-di(tert-butylperoxy)cyclohexane, di(3,5,5-trimethylhexanoyl)peroxide, 1,1-di(tert-hexylperoxy)cyclohexane, 1,1-di(tert-hexylperoxy)-3,3,5-trimethyl cyclohexane, 1,1-di(tert-butylperoxy)-2-methyl cyclohexane, and the like.

Moreover, examples of the peroxyester include tert-butylperoxybenzoate, tert-butylperoxyacetate, tert-hexylperoxybenzoate, tert-butylperoxy-2-ethylhexyl monocarbonate, tert-butylperoxylaurate, tert-butylperoxyisopropylmonocarbonate, tert-butylperoxy-3,5,5-trimethylhexanoate, tert-butylperoxy maleic acid, tert-hexylperoxyisopropylmonocarbonate, and the like.

The amount of crosslinking agent to be compounded is preferably about 0.5 to 10 parts by weight, more preferably about 1 to 5 parts by weight, based on 100 parts by weight of blended rubber. Within the above range, it is possible to prevent that molding cannot be performed due to foaming during crosslinking, and the crosslinking density becomes good so that the resulting product is likely to have sufficient physical properties.

Moreover, a master batch containing the above-mentioned organic peroxide can also be used. Such a masterbatch is preferable from the viewpoint that kneadability and dispersibility can be improved during preparation of the rubber composition.

Further, a crosslinking accelerator may be contained, if necessary. As the crosslinking accelerator, triallyl isocyanurate, triallyl cyanurate, liquid polybutadiene, N,N'-m-phenylenedimaleimide, trimethylolpropane trimethacrylate, or the like can be used. By compounding and adding a suitable amount of crosslinking accelerator, crosslinking efficiency can be improved, and further heat resistance and mechanical properties can be improved; thus, the stability as a sealing part can also be improved.

The rubber composition preferably further contains a processing aid and a lubricant. Examples of the processing aid include process oils containing aliphatic hydrocarbon as a main component, such as PW380 and PW220 (produced by Idemitsu Kosan Co., Ltd.). These can be used singly or in combination. In particular, process oils have a lower molecular weight than paraffin wax having a similar chemical structure, and are thus more preferable from the viewpoint that they have a unique effect that cannot be achieved when paraffin wax is compounded. As the lubricant, for example, Diamid O-200 and Diamid L-200 (produced by Nihonkasei Co., Ltd.), which are fatty acid amides, are used.

The compounding amounts of the processing aid and the lubricant are each preferably about 1 to 20 parts by weight, more preferably about 3 to 15 parts by weight, based on 100 parts by weight of the blended rubber. Within the above range, the kneading processability is improved, and the occurrence of oil bleeding can be prevented.

In addition to the above components, the rubber composition may suitably contain, if necessary, compounding agents generally used in the rubber industry, such as acid acceptors, and antioxidants, as rubber compounding agents. The amount of rubber compounding agent to be compounded is preferably about 300 parts by weight or less based on 100 parts by weight of blended rubber.

The rubber composition can be prepared by melt-kneading the above various materials at a melting temperature of 120 to 150°C using a kneading machine, such as a single-screw extruder, a twin-screw extruder, a roll, a Banbury mixer, a kneader, or a high shear mixer.

Moreover, the rubber composition can be crosslinked by pressure crosslinking generally at about 155 to 230°C for about 0.5 to 30 minutes using an injection molding machine, a compression molding machine, or the like. Further, after the above primary crosslinking is performed, a secondary crosslinking may be performed, if necessary, in order to ensure the crosslinking up to the inside of the crosslinked product. The secondary crosslinking can be generally performed by oven heating at about 150 to 250°C for about 0.5 to 24 hours.

The rubber crosslinked molded product obtained by crosslinking and molding the rubber composition according to the present invention has low temperature rubber properties particularly at -50°C and is suitable as a rubber crosslinked molded product to be used in a low temperature environment (e.g., about -40°C to -60°C). Such a rubber crosslinked molded product preferably has a TR 10 value of -50°C or lower, as measured by the low temperature elastic recovery test specified in JIS K6261: 2006 corresponding to ISO 2921. Further, the rubber crosslinked molded product of the present invention preferably has an appropriate hardness. For example, when the rubber crosslinked molded product is an O-ring, the Type A durometer hardness specified in JIS K6253-1: 2012 corresponding to ISO 18517 is preferably 65 to 95.

The obtained rubber crosslinked molded product is suitably used as a sealing material for solid polymer fuel cell separators.

### EXAMPLES

The following describes the present invention with reference to Examples.

**Example 1**

| | |
|---|---|
| Ethylene/butene/diene copolymer rubber (EBT K-9330M, produced by Mitsui Chemicals, Inc.) | 100 parts by weight |
| Ethylene/octene copolymer | 5 parts by weight |
| (Engage XLT8677, produced by The Dow Chemical Company, melting point: 118°C, Tg: -65°C) | |
| MT carbon black (Thermax N990, produced by Cancarb Limited) | 60 parts by weight |
| Organic peroxide (Percumyl D, produced by NOF Corporation) | 2 parts by weight |

The above components, other than the organic peroxide, were each kneaded with a kneader at 120°C, and the organic peroxide was then added and kneaded with an open roll.

The kneaded product was crosslinked at 180°C for 10 minutes, and then oven crosslinked at 150°C for 24 hours to obtain a crosslinked molded product. The kneaded product and the crosslinked molded product were evaluated and measured for the following items.
Roll processability:
   ○: Good roll winding properties
   ×: Unwound on roll
Bite of compound into screw:
   ○: Good bite of compound into screw
   ×: Rubber compound breakage due to screw shear
Compression set:
   3 sheets having a thickness of 2 mm were laminated, and the compression set after 25% compression in the air at 95°C for 500 hours was measured
Measurement method 1: According to JIS K6262 corresponding to ISO 815-1
   The compression was released immediately after taking the laminated sheets from a thermostat bath, and the thickness after 30 minutes was measured
Measurement method 2: After the laminated sheets were taken from a thermostat bath and cooled to room temperature, the compression was released, and the thickness after 30 minutes was measured
   Evaluation: ○ a compression set of 25% or less
   Evaluation: × a compression set of 26% or more
Low temperature elastic recovery test: According to JIS K6261 corresponding to ISO 2921

| | |
|---|---|
| TR10: | ○ -55°C or lower |
| | × -54°C or higher |
| TR70: | ○ -40°C or lower |
| | × -39°C or higher |

### Example 2

In Example 1, the amount of ethylene/octene copolymer was changed to 7 parts by weight.

### Example 3

In Example 1, the amount of ethylene/octene copolymer was changed to 3 parts by weight.

### Comparative Example 1

In Example 1, the ethylene/octene copolymer was not used.

### Comparative Example 2

In Example 1, the amount of ethylene/octene copolymer was changed to 2 parts by weight.

### Comparative Example 3

In Example 1, the amount of ethylene/octene copolymer was changed to 10 parts by weight.

### Comparative Example 4 to 6

In Example 2, the same amounts (7 parts by weight) of other ethylene/α-olefin copolymers (all of which are produced by The Dow Chemical Company) were used in place of the ethylene/octene copolymer.

**Table 1**

| Comparative Example | Product name | Copolymer | Melting point (°C) | Tg (°C) |
|---|---|---|---|---|
| 4 | ENGAGE 8540 | ethylene/octene | 104 | -32 |
| 5 | ENGAGE 7487 | ethylene/butene | 37 | -57 |
| 6 | ENGAGE 7270 | ethylene/butene | 64 | -44 |

Table 1 below shows the results obtained in the above Examples and Comparative Examples.

**Table 2**

| Evaluation · measurement item | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Roll processability | ○ | ○ | ○ | ○ | ○ | × | ○ | ○ | ○ |
| Bite of compound into screw | ○ | ○ | ○ | × | × | ○ | ○ | × | ○ |

| Compression set | | | | | | | | | |
|---|---|---|---|---|---|---|---|---|---|
| Measurement method 1 (%) | 12 | 13 | 14 | 14 | 14 | 14 | 14 | 14 | 19 |
| Evaluation | ○ | ○ | ○ | ○ | ○ | ○ | ○ | ○ | ○ |
| Measurement method 2 (%) | 20 | 24 | 18 | 16 | 18 | 30 | 32 | 17 | 38 |
| Evaluation | ○ | ○ | ○ | ○ | ○ | × | × | ○ | × |

| Low temperature elastic recovery test | | | | | | | | | |
|---|---|---|---|---|---|---|---|---|---|
| TRIO (°C) | -59 | -59 | -59 | -59 | -59 | -59 | -58 | -59 | -58 |
| Evaluation | ○ | ○ | ○ | ○ | ○ | ○ | ○ | ○ | ○ |
| TR70 (°C) | -43 | -41 | -44 | -44 | -44 | -40 | -31 | -36 | -36 |
| Evaluation | ○ | ○ | ○ | ○ | ○ | ○ | × | × | × |

## Claims

1. A rubber composition comprising 2.5 to 7.5 parts by weight of an ethylene/α-olefin copolymer having a melting point of 100°C or higher and a glass transition temperature Tg of -55°C or lower, based on 100 parts by weight of ethylene/butene/diene copolymer rubber.

2. The rubber composition according to claim 1, wherein the ethylene/α-olefin copolymer comprises an α-olefin having 4 to 8 carbon atoms.

3. The rubber composition according to claim 1 or 2, wherein an organic peroxide is further compounded.

4. A crosslinked molded product obtained by crosslinking and molding the peroxide crosslinkable rubber composition according to claim 3.

5. The rubber crosslinked molded product according to claim 4, which is used as a sealing material.

6. The rubber crosslinked molded product according to claim 5, which is used as a sealing material for solid polymer fuel cell separators.

7. A method for producing the rubber composition according to claim 1 or 2, wherein the rubber composition is prepared by a melt kneading method.

8. The method for producing the rubber composition according to claim 7, wherein melt-kneading is performed at a melting temperature of 120 to 150°C.
